# EUROPEAN PATENT APPLICATION

(11) **EP 4 095 500 A1**
(43) Date of publication of application: **30.11.2022**
(21) Application number: 21176420.4
(22) Date of filing: 28.05.2021
(51) Int. Cl.: G01K 13/02, G01H 3/00, G01N 9/00

(54) **THERMOMETER WITH VIBRATION DETECTION**

(71) Applicant: Endress+Hauser Wetzer GmbH+Co. KG, 87484 Nesselwang (DE)
(72) Inventor: Umkehrer, Alfred, 87659 Hopferau (DE); Huth, Robert, 87669 Rieden (DE); Niederer, Manfred, 87527 Sonthofen (DE); Fortunato, Gianluca, 20153 Milano (IT); Waldhauser, Dieter, 87471 Durach (DE); Prokesch, Peter, 87471 Durach (DE)
(74) Representative: Koslowski, Christine Adelheid

(57) **Abstract**

The present invention relates to a device (1) for determining and/or monitoring a temperature (T) of a medium (M) in a pipe, container or vessel (2), comprising a measuring insert (4) having a temperature sensor (5) for determining and/or monitoring the temperature (T) or the medium (M),
a protective tube (3) for receiving the measuring insert (4),
a housing module (7), in which at least one connection element (12) for establishing an electrical connection of the device (1) is arranged. The device (1) further comprises a vibration module (9) including a vibration and/or acceleration sensor (10) for detecting vibrations and/or shocks in an area surrounding the device (1) and/or in the device (1). The invention also relates to a method for detecting vibrations and/or shocks, especially in process plants, using a device (1) according to the present invention.

## Description

The present invention is concerned with a device for determining and/or monitoring a temperature of a medium in a container or vessel, and a method for detection vibrations in process plants using a device according to the present invention.

Thermometers have become known from the state of the art in a wide variety of designs. For example, there are thermometers that use the expansion of a liquid, a gas or a solid with a known coefficient of expansion to measure the temperature. Other thermometers associate the electrical conductivity of a material with the temperature, for example when resistance elements or thermocouples are used. Pyrometers, on the other hand, use the heat radiation of a substance to determine its temperature. The respective underlying measuring principles have each been described in a large number of publications.

A temperature sensor in the form of a so-called thin-film sensor, in particular a resistance temperature detector (RTD), for example, uses a sensor element provided with connecting wires and applied to a carrier substrate, whereby the rear side of the carrier substrate is usually metallically coated. The sensor elements used are so-called resistor elements, which are given for example by platinum elements, which are also commercially available as PT10, PT100, and PT1000 elements.

In case of thermocouple in turn the temperature is determined by means of a thermoelectric voltage occurring between the thermocouple wires connected at one end and consisting of different materials. For temperature measurement, commonly thermocouples according to DIN standard IES584, for example thermocouples of type K, J, N, S, R, B, T, or E, are used as temperature sensors. But other material pairs, especially those with a measurable Seebeck effect, are also possible.
Often, the temperature sensors are arranged in a measuring inset which in turn are brought into contact with the medium via a protective tube in the form of a thermowell. Such protective tubes are subject to high loads, in particular when they are exposed to a flowing medium which causes different mechanical forces acting on the protective tube, e. g. shear forces or forces induced by coherent vortex shedding which can result in vortex induced vibrations (VIV). Vortex shedding in fluid dynamics is known as "Kármán vortex street" and refers to a repeating pattern of swirling vortices in alternating directions caused by the unsteady separation of flow of a medium around a body, causing said body to vibrate. The closer the frequency of the vibrations is to the natural frequency of the body around which the medium flows, the more the body vibrates. The frequency of the vibrations is e. g. determined by several process parameters, such as the physical properties of the medium, the flow velocity and the shape of the body.

Besides, changes of the process conditions, changes of the protective tube over time, e.g. to abrasion, corrosion or caking can also lead to damage of the protective tube.

In order to reduce the risk of damage of protective tubes, e.g. thermowells, standard methods, such as ASME PTC 19.3 TW-2000, have been provided, which define several design rules that help to reduce possible damage of thermowells, in particular with regards to flowing media. The basic principle underlying the design rules is to increase the natural frequency of vibrations of the thermometer to separate the natural frequency from the vortex shedding frequency to minimize resonant vortex induced vibrations. For this purpose, commonly the geometry of the thermometer is varied, e. g. by reducing its length and/or by increasing its diameter. However, the design is carried out by using standardized algorithms assuming maximum loads exercised on the protective tube, which are not necessarily precisely reflecting the real process conditions.

Alternatively or additionally, especially when functional constraints don't allow certain changes in the dimensions of the thermometer, mechanical supports or absorbers are frequently used to reduce the thermometer's sensitivity to vortex shedding. These mechanical supports or absorbers are usually fitted into a gap between the opening of the vessel or pipe and the outside surface of the thermometer. The supports or absorbers then increase the natural frequency of the thermometer by reducing the free length of the thermometer. However, it proves difficult to fit the supports or absorbers in such a way that a high level of coupling and therefore the desired effect can be achieved.

Yet, another approach to reduce VIV of protective tubes is to provide certain structures or structural elements on the protective tube, as e. g. suggested in US 2004/0051004 A1, US 8,500,367 B2, US 6,401,646 B1, EP03184980A1, US9528918B2, US3076533A, US4991976, US7424396B2, US653931B1, US7836780B2, US2013/0142216A1, GB2442488A or WO2020/035402A1.

Besides modifying the protective tube itself, it has also become known to monitor the flow velocity of the medium and to compare it with a threshold corresponding to a VIV-resonance frequency of the protective tube und to produce a warning in case the threshold is reached as suggested in DE102013113365A1.

Based on the known solutions, it is an object of the present invention to provide a thermometer and a method for operating the thermometer, via which insight about the current status of a protective tube can be gained in an easy and straightforward manner.

The object is achieved by a device for determining and/or monitoring a temperature of a medium in a pipe, container or vessel, comprising a measuring insert having a temperature sensor for determining and/or monitoring the temperature or the medium, a protective tube, e.g. a thermowell, for receiving the measuring insert, and a housing module, in which at least one connection element for establishing an electrical connection of the device is arranged. The device further comprises a vibration module including a vibration and/or acceleration sensor for detecting vibrations and/or shocks in an area surrounding the device and/or in the device.

The device according to the present invention is thus embodied to monitor or detect vibrations in the vicinity of the device and/or in any component of the device, e.g. the protective tube. That way, loads exercised on the protective tube can be readily detected giving deep and accurate insight into the actual current status of the protective tube. The detection of vibrations and/or mechanical shocks ensures that actual process conditions are considered at all times. Furthermore, various sources of vibrations and/or shocks which might cause a load on the protective tube are taken into consideration, such as vibrations and/or shocks caused by a flowing medium, caused by any other component in the process plant and/or vibrations and/or shocks caused by the device itself, e.g. such tracing back to the installation of the device. Moreover, also the status of the protective tube itself, in particular the presence of abrasion, corrosion or caking, can be duly considered.

The vibration module may include one or more vibration and/or acceleration sensors, e.g. at different locations in the device and/or the vicinity of the device. The vibration and/or acceleration sensor in turn can be embodied in the form of a piezoceramic sensor or in the form of a micro-electro-mechanical system (MEMS) sensor.

In one embodiment, at least one component of the vibration module, especially the vibration and/or acceleration sensor, is arranged in or on the protective tube or measuring insert, in an area of a process connection of the device, in particular in a transitional area between the process connection and the protective tube, or in the housing module.

One embodiment comprises that the device further comprises an electronics unit. The electronics unit is preferably arranged in the housing module. The housing module, especially the housing module and the electronics unit, can either be arranged together with the measuring insert, providing a compact thermometer design, or also separated from the measuring insert. The electronics unit can be an exchangeable module of the housing module.

It is of advantage, if at least one component of the vibration module, especially the vibration and/or acceleration sensor, is part of the electronics unit. This component can e.g. be integrated on a circuit board of the electronics, which can in turn e.g. be a transmitter.

In one embodiment the device further comprises a vibration generator. The vibration generator can be arranged close to the vibration and/or acceleration sensor or separate therefrom. It might be arranged in a separate unit, e.g. installed in an area surrounding the device, or being part of the vibration module. The device can comprise one or more vibration generators.

In another embodiment the device further comprises a sensing element for determining at least one additional process variable of the medium, in particular a filling level, the density, or the viscosity of the medium. In this regard, it is of advantage, if the sensing element is embodied as a part of a vibronic sensor having a mechanical oscillatable unit and a excitation-/receiving-unit serving to excite the oscillatable unit to mechanical oscillation and to detect the oscillations from which the process variable is derived. In this regard, it is further of advantage, if the protective tube is part of the oscillatable unit or if the oscillatable unit, e.g. in the form of a tuning fork, is attached to the protective tube. The vibration generator can serve for excitation of the oscillations while the vibration module, in particular the at least one vibration and/or acceleration sensor can serve for detecting the mechanical oscillations. Besides, also other sensing elements can be used, e.g. sensing units based on the ultrasonic or microwave measuring principles.

The objective technical problem underlying the present invention is further solved by a method for detecting vibrations and/or shocks, especially in process plants, using a device according to the invention, comprising the following method steps:
- Detection of a received signal from a vibration and/or acceleration sensor,
- Evaluation of the received signal and/or at least one characteristic variable associated therewith, with regards to at least one vibration and/or shock in an area surrounding the device and/or in the device, and
- Determination of the vibration and/or shock and/or at least one characteristic variable associated with the at least one vibration and/or shock, in particular a frequency, amplitude or vibration velocity based on the evaluation.

Evaluating the received signal of a vibration and/or acceleration sensor of the device with regards to vibrations and/or shocks gives deep insight into the actual status of the device, in particular of the protective tube of the device. As outlined above, vibrations of different origins, e.g. caused by a flowing medium, by any component of the process plant or the device itself, can be detected. Moreover, the status of the thermowell, especially regarding changes over time, e.g. due to abrasion, corrosion or baking, can also be readily observed.

One embodiment of the method comprises that the received signal and/or the at least one characteristic variable associated therewith is/are evaluated
- based on a comparison with at least one predefined reference value for the received signal,
- based on a comparison with at least one value of the received signal at predetermined, especially past, times, and/or
- based on a mathematical procedure, especially a fourier-transformation.

Another embodiment comprises that the received signal and/or the at least one characteristic variable associated therewith is/are recorded as a function of time, wherein a condition monitoring is performed based on the time course of the received signal.

It shall be noted that possible evaluation methods of the received signal, or received signals in case more than one vibration or acceleration sensor is installed, are by no means limited to those listed here. For instance, different evaluations can also be combined with each other and furthermore, also other procedures can be implemented to derive information about vibrations and/or shocks in the vicinity of the device or in the device itself as well as information about their various possible origins.

In one embodiment,
- a condition of the process plant, especially a component of the process plant, and/or
- a condition of the device, especially a component of the device, e.g. a process connection or protective tube, and/or
- a condition of the medium, e.g. its type, flow rate, density, viscosity or the Reynold number,
is/are determined based on the determined vibration and/or shock and/or the at least one characteristic variable associated therewith.

Such conditions can e.g. be a defect, a fatigue or the occurrence of abrasion, fouling, caking or corrosion of at least one component of the device, e.g. the protective tube, or the process plant. If a defective condition is determined or if a threshold for a condition is reached, e.g. a warning signal can be produced. That way, especially in case the received signal is recorded over time and continuously or periodically evaluated, also a condition monitoring can be carried out.

The determining of such defective condition of the process plant, device and/or medium can also be based on an algorithm, in particular a self-learning algorithm like for instance a supervised machine learning algorithm.

One embodiment of the method comprises that a vibration velocity and/or frequency of at least one vibration and/or shock is determined, wherein in particular a warning is issued in the case that the vibration velocity exceeds a predeterminable limit value.

Another embodiment of the method comprises that a frequency of the at least one vibration is determined, and in particular wherein a warning is issued in the case that a difference of the frequency and a resonance frequency of the protective tube falls under a predeterminable limit value.

By determining the velocity and/or frequency of the vibration and/or shock, e.g. vibrations due to coherent vortex shedding can be easily determined. In particular, resonant oscillations of the protective may be avoided.

The evaluation of the received signal with respect to at least one vibration and/or shock or at least one characteristic variable associated therewith preferably is carried out in an electronics unit of the device. Alternatively, the received signal can also be transmitted to an external unit embodied to carry out an evaluation of the received signal or the received signals in case mor than one vibration and/or acceleration sensor is installed.

In one embodiment of the method, a vibration and/or shock is generated by means of a vibration generating unit and preferably by using a predetermined excitation signal. The excitation signal can be such that is comprises a constant or variable frequency and/or amplitude. Furthermore, different vibration directions can be induced. That way, known vibrations can be induced by purpose.

In this regard it is of advantage, if the received signal and/or the at least one characteristic variable associated therewith is compared to the excitation signal. That way, a change in the device or in an area surrounding the device can be monitored.

It is further of advantage, if based on the comparison
- a mechanical noise associated with the process plant
- a vortex induced vibration of the protective tube, and/or
- at least one condition of a flowing medium in case the container or vessel is a pipe, e.g. a mass flow rate, a density of the medium or the Reynold number or the medium,
is determined. In particular, it is also possible to derive a reference value for any of the quantities derived from the comparison which may correspond to an initial status of the device and/or process plant, e.g. directly after installation, and to observe changes of that particular quantity over time.

It is also of advantage, if the excitation signal is chosen such that a resonant oscillation of the protective tube is avoided. That way, it becomes possible to prevent coherent vortex shedding of the protective tube by actively applying an excitation signal which is chosen such that it at least partly opposes the oscillations of the protective tube induced by a flowing medium.

It is finally also of advantage if at least one source for a vibration and/or shock is detected and/or removed based on the evaluation of the received signal. This can be carried out in a passive way by just recording the vibration and/or shock via the vibration and/or acceleration sensor or actively by causing known vibrations and/or shocks via the vibration generator any by evaluating the received signal in response to the excitation signal fed to the vibration generator.

It shall be noted that the embodiments described in connection with the device are mutatis mutandis also applicable in connection with the method and vice versa.

In the following, the present invention will be explained based on the drawings presented in Figs. 1-3.
Fig. 1 shows (a) a compact thermometer and (b) a modular thermometer, both including a vibration module according to the present invention;
Fig. 2 shows a compact thermometer with a vibration module and a vibration generator; and
Fig. 3 shows a compact thermometer similar as in case of Fig. 2 but including an additional sensing element in the form of a vibronic sensor.

In the figures, identical elements are always provided with the same reference signs.

Although all figures shown refer to the case of a flowing medium contained in a pipe 2, the inventive device 1 can also be used for a vessel or container. This invention is therefore by no means limited to pipes. Similarly, this invention is as well by no means limited to temperature sensors 5 in the form of a resistive element, even though such sensing element is shown in all figures.

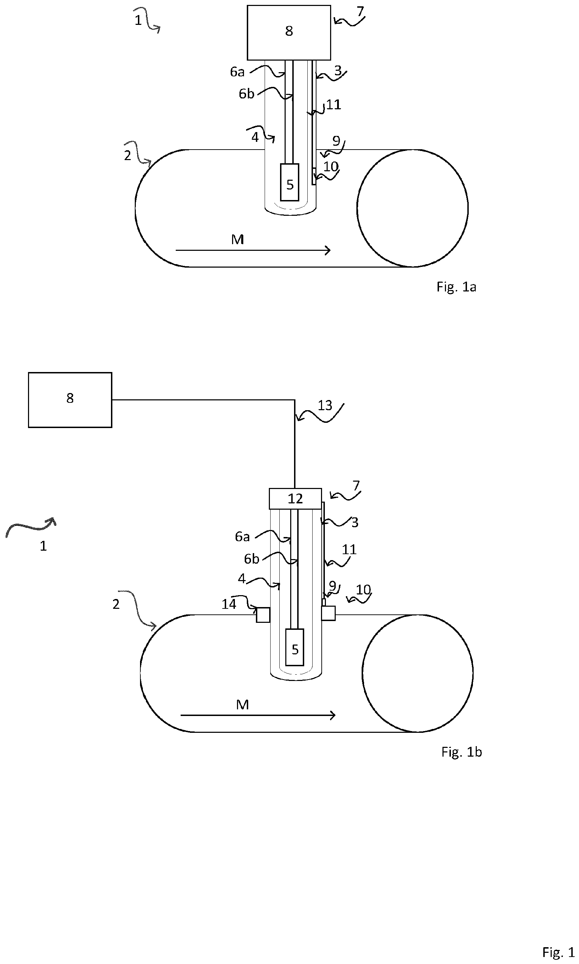

Fig. 1 shows a thermometer 1 which serves for determining and/or monitoring the temperature of medium M in pipe 2. The device 1 comprises a protective tube 3 in the form of a thermowell in which a measuring insert 4 including temperature sensor and connection wires 6a, 6b is arranged such that the protective tube reaches into an inner volume of pipe 2. The device further comprises a housing module 8 attached to the protective tube 3 in which electronics unit 8 is arranged. The device further comprises a vibration module 9 including a vibration and/or acceleration sensor 9 connected to the electronics unit 8 via connection wire 11 via which a received signal R of the vibration and/or acceleration sensor is transmitted. The vibration and/or acceleration sensor in this embodiment is arranged on an inside wall of protective tube 3. In other embodiments, also other locations for the vibration and/or acceleration sensor 10 are possible.

In case of Fig. 1b the electronics is arranged separately from the protective tube 3 and measuring insert 4. In that case the housing module 7 does not accommodate the electronics unit 8 but only a connection element 12 [not visible in Fig. 1a] for connection the temperature sensor 5 and the vibration and/or acceleration sensor 10 as well as electronics unit 8. The electronics unit 8 is thereby connected to the housing module 7 vial connection wire 13.

In case of Fig. 1b, furthermore the vibration and/or acceleration sensor 10 of the vibration module 9 is arranged on an outside wall of protective tube 3 in the vicinity of the process connection 14 in a transitional are between the process connection 14 and the protective tube. Yet, other embodiments can also comprise a vibration and/or acceleration sensor located in the housing module 7, the electronics unit 8 or even elsewhere. Additionally, also more than one vibration and/or acceleration sensor 10 can be arranged in the same device 1.

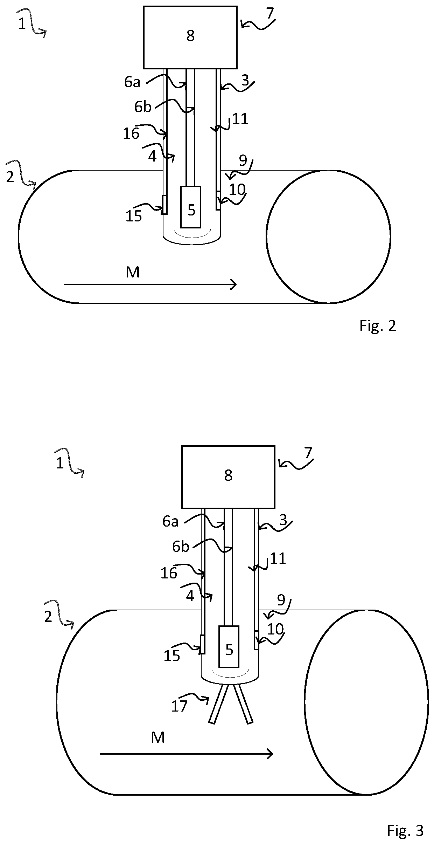

The device 1 shown in Fig. 2 is embodied very similar as the device 1 shown in Fig. 1a. Additionally to Fig. 1a, the device 1 of Fig. 2 additionally comprises a vibration generator 15 connected to the housing module 7 or the electronics unit 8 respectively, via connection line 16. The vibration generator 15 serves for causing vibrations and/or shocks by applying an excitation signal E via connection line 16.

Finally, the device shown in Fig. 3 is embodied similarly as the device shown in Fig. 2. Additionally, the device of Fig. 3 includes a sensing element 17 for determining at least one additional process variable. The sensing element 17 here has the form of an mechanically oscillatable unit of a vibronic sensor in the form of a tuning fork. With such vibronic sensor, a filling level, the density of the viscosity of the medium can be derived in addition to its temperature T which is monitored by temperature sensor 5.

### Reference symbols

- 1: Measuring device
- 2: Pipe
- 3: Protective tube
- 4: Measuring insert
- 5: Temperature sensor
- 6a, 6b: Connection wires of temperature sensor
- 7: Housing module
- 8: Electronics unit
- 9: Vibration module
- 10: Vibration and/or acceleration sensor
- 11: Connection line for vibration and/or acceleration sensor
- 12: Connecting element
- 13: Connection line for electronics unit
- 14: Connecting means
- 15: Vibration generator
- 16: Connection line for vibration generator
- 17: Additional Sensing element

- M: Medium
- R: Received signal
- E: Excitation signal

## Claims

1. Device (1) for determining and/or monitoring a temperature (T) of a medium (M) in a pipe, container or vessel (2), comprising
a measuring insert (4) having a temperature sensor (5) for determining and/or monitoring the temperature (T) or the medium (M),
a protective tube (3) for receiving the measuring insert (4),
a housing module (7), in which at least one connection element (12) for establishing an electrical connection of the device (1) is arranged,
**characterized in that**,
the device (1) further comprises a vibration module (9) including a vibration and/or acceleration sensor (10) for detecting vibrations and/or shocks in an area surrounding the device (1) and/or in the device (1).

2. Device (1) according to claim 1,
wherein at least one component of the vibration module (9), especially the vibration and/or acceleration sensor (10), is arranged in or on the protective tube (3) or measuring insert (4), in an area of a process connection (14) of the device (1), in particular in a transitional area between the process connection (14) and the protective tube (3), or in the housing module (7).

3. Device (1) according to any of the preceding claims,
wherein the device (1) further comprises an electronics unit (8).

4. Device (1) according to claim 3,
wherein at least one component of the vibration module (9), especially the vibration and/or acceleration sensor (10) is part of the electronics unit (8).

5. Device (1) according to any of the preceding claims,
wherein the device (1) further comprises a vibration generator (15).

6. Device (1) according to any of the preceding claims,
further comprising a sensing element (17) for determining at least one additional process variable of the medium (M), in particular a filling level, the density, or the viscosity of the medium (M).

7. Method for detecting vibrations and/or shocks, especially in process plants, using a device (1) according to at least one of the preceding claims, comprising the following method steps:
- Detection of a received signal (R) from a vibration and/or acceleration sensor (10),
- Evaluation of the received signal (R) and/or at least one characteristic variable associated therewith, with regards to at least one vibration and/or shock in an area surrounding the device (1) and/or in the device (1), and
- Determination of the vibration and/or shock and/or at least one characteristic variable associated with the at least one vibration and/or shock, in particular a frequency, amplitude or vibration velocity based on the evaluation.

8. Method according to claim 7,
wherein the received signal (R) and/or the at least one characteristic variable associated therewith is/are evaluated
- based on a comparison with at least one predefined reference value for the received signal (R),
- based on a comparison with at least one value of the received signal (R) at predetermined, especially past, times, and/or
- based on a mathematical procedure, especially a fourier-transformation.

9. Method according to any of the claims 7 or 8,
wherein the received signal (R) and/or the at least one characteristic variable associated therewith is/are recorded as a function of time, and wherein a condition monitoring is performed based on the time course of the received signal (R).

10. Method according to any of the claims 7-9,
wherein based on the determined vibration and/or shock and/or the at least one characteristic variable associated therewith,
- a condition of the process plant, especially a component of the process plant, and/or
- a condition of the device (1), especially a component of the device (1), e.g. a process connection (14) or protective tube (3), and/or
- a condition of the medium (m), e.g. its type, flow rate, density, viscosity or the Reynold number,
is/are determined.

11. Method according to at least one of the claims 7-10,
wherein a vibration velocity of at least one vibration and/or shock is determined, and in particular wherein a warning is issued in the case that the vibration velocity exceeds a predeterminable limit value.

12. Method according to at least one of the claims 7-11,
wherein a frequency of the at least one vibration is determined, and in particular wherein a warning is issued in the case that a difference of the frequency and a resonance frequency of the protective tube falls under a predeterminable limit value.

13. Method according to at least one of the claims 7-12,
wherein a vibration and/or shock is generated by means of a vibration generating unit (15) and preferably by using a predetermined excitation signal (E).

14. hod according to claim 13,
wherein the received signal (R) and/or the at least one characteristic variable associated therewith is compared to the excitation signal (E).

15. Method according to claim 14,
wherein based on the comparison
- a mechanical noise associated with the process plant
- a vortex induced vibration of the protective tube (3), and/or
- at least one condition of a flowing medium (M) in case the container or vessel is a pipe (2), e.g. a mass flow rate, a density of the medium (M) or the Reynold number or the medium (M),
is determined.
